# EUROPEAN PATENT APPLICATION

(11) **EP 4 722 906 A1**
(43) Date of publication of application: **08.04.2026**
(21) Application number: 24818230.5
(22) Date of filing: 18.01.2024
(51) Int. Cl.: G06F 9/455

(54) **OPENSTACK-BASED CLOUD COMPUTING PLATFORM UPGRADING METHOD AND RELATED DEVICE**

(30) Priority: 08.06.2023 CN 202310682450
(71) Applicant: ZTE CORPORATION, Shenzhen, Guangdong 518057 (CN)
(72) Inventor: CHEN, Xueyuan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/073042
(87) International publication number: WO 2024/250692

(57) **Abstract**

The present application relates to the technical field of cloud computing, and provides an OpenStack-based cloud computing platform upgrading method and a related device. The method comprises: when a control node runs a first control node virtual machine, loading an upgraded version of the control node; on a host where the control node is located, offline creating a second control node virtual machine corresponding to the upgraded version; and when the creation of the second control node virtual machine is completed, replacing the first control node virtual machine with the second control node virtual machine.

## Description

### CROSS-REFERENCE TO RELATED APPLICATIONS

The present application claims priority to Chinese Application No. 202310682450.2, filed with the Chinese Patent Office on June 08, 2023, with the title "OPENSTACK-BASED CLOUD COMPUTING PLATFORM UPGRADING METHOD AND RELATED DEVICE", the disclosure of which is hereby incorporated by reference in its entirety.

### TECHNICAL FIELD

The present application relates to the field of cloud computing technology, and in particular to an OpenStack-based cloud computing platform upgrading method and related device.

### BACKGROUND

With the increasing prevalence of cloud computing infrastructure, upgrading cloud computing infrastructure has become an essential operation in the lifecycle maintenance of cloud platforms. Based on the degree of impact on service, cloud computing infrastructure upgrades can be divided into two types: offline upgrades and online upgrades. During the offline upgrade process, managing virtual machines, network element virtual machines, and service virtual machines will shut down, restart, and not perform any grayscale processing. This upgrade method has a fast upgrade speed, but there may be prolonged service interruptions; Online upgrade refers to rolling and batch upgrade processes using methods such as hot migration during the upgrade process, in order to maintain uninterrupted service as much as possible, however, the upgrade duration is relatively long, and Single Root I/O Virtualization (SRIOV) virtual machines cannot be hot migrated or achieve uninterrupted service. SRIOV virtual machine refers to a virtual machine based on the SRIOV specification, and SRIOV (PCI-SIG Single Root I/O Virtualization and Sharing) is a specification published by the PCI-SIG organization. The purpose of designing the PCI-SIG SRV specification is to avoid the intervention of Virtual Machine Monitor (VMM) by providing independent memory addresses, interrupts, and Data Memory Access (DMA) streams for virtual machines. In other examples, there are also online batch upgrade schemes that rely on network element disaster recovery switching, but require network element cooperation, with complex upgrade operations, high manpower requirements, and long upgrade duration.

In summary, regarding the different cloud computing infrastructure upgrade solutions that already exist in traditional technologies, whether it is hot migration or disaster recovery switching, they may have a certain degree of service impact on some network sensitive applications. In addition, if the upgrade process triggers service failures that cannot be quickly restored, it will also have a significant impact on existing network service and pose great risks. Online upgrade methods cannot achieve complete service continuity. Therefore, there is an urgent need for cloud computing infrastructure upgrade solutions that can ensure the effective continuation of cloud computing service.

### SUMMARY

The present application provides an OpenStack-based cloud computing platform upgrading method and the related device, which can improve the reliability, stability, and service continuity of infrastructure version upgrades for cloud computing platforms.

In the first aspect, the present application provides an OpenStack-based cloud computing platform upgrading method, comprising: loading an upgraded version of a control node, when the control node runs a first control node virtual machine; offline creating, on a host where the control node is located, a second control node virtual machine corresponding to the upgraded version; and replacing the first control node virtual machine with the second control node virtual machine, when the creation of the second control node virtual machine is completed.

In the second aspect, the present application further provides a cloud computing platform, comprising a processor, a memory, a computer program stored in the memory and executable by the processor, and a data bus for establishing communication between the processor and the memory, wherein the computer program, when executed by the processor, implements the steps of any OpenStack-based cloud computing platform upgrading methods provided in the specification of the present application.

In the third aspect, the present application further provides a storage medium for computer-readable storage, having one or more programs stored thereon, the one or more programs being executable by one or more processors to implement the steps of any OpenStack-based cloud computing platform upgrading methods provided in the specification of the present application.

### BRIEF DESCRIPTION OF DRAWINGS

In order to more clearly illustrate the technical solution of the embodiments of the present application, the accompanying drawings required for describing the embodiments will be briefly introduced below. Obviously, the accompanying drawings in the following description are some embodiments of the present application. For those skilled in the art, other accompanying drawings can also be obtained based on these drawings without exerting creative efforts.
Fig. 1 is a flowchart of the OpenStack-based cloud computing platform upgrading method provided in an embodiment of the present application;
Fig. 2 is a schematic diagram of the control node switching for upgrading the OpenStack-based cloud computing platform upgrading method provided in an embodiment of the present application;
Fig. 3 is a first sub flowchart of the OpenStack-based cloud computing platform upgrading method provided in an embodiment of the present application;
Fig. 4 is a first interaction flowchart for cross version compatibility of the OpenStack-based cloud computing platform upgrading method provided in an embodiment of the present application;
Fig. 5 is a flowchart of the cross version compatible processing of different computing nodes for the OpenStack-based cloud computing platform upgrading method provided in an embodiment of the present application;
Fig. 6 is a flowchart of the original serialization-deserialization processing method in the OpenStack-based cloud computing platform upgrading method provided in an embodiment of the present application;
Fig. 7 is a second sub flowchart of the OpenStack-based cloud computing platform upgrading method provided in an embodiment of the present application;
Fig. 8 is a second interaction flowchart for cross version compatibility of the OpenStack-based cloud computing platform upgrading method provided in an embodiment of the present application;
Fig. 9 is a third sub flowchart of the OpenStack-based cloud computing platform upgrading method provided in an embodiments of the present application;
Fig. 10 is a fourth sub flowchart of the OpenStack-based cloud computing platform upgrading method provided in an embodiment of the present application;
Fig. 11 is a schematic diagram of the structure of a cloud computing platform provided in an embodiment of the present application.

### DETAILED DESCRIPTION

Below, the technical solutions in the embodiments of the present application will be clearly and completely described in conjunction with the accompanying drawings. Obviously, the described embodiments are a part of the embodiments of the present application, not all of them. Based on the embodiments of the present application, all other embodiments obtained by those skilled in the art without creative labor are within the scope of protection of the present application.

The flowchart shown in the accompanying drawings are only an illustrative example and does not necessarily include all contents and operations/steps, nor does it have to be executed in the order described. For example, some operations/steps can also be decomposed, combined, or partially merged, so the actual execution order may change according to the actual situation.

It should be understood that the terms used in the specification of the present application are only for the purpose of describing specific embodiments and are not intended to limit the present application. As used in the present specification and accompanying claims, unless the context clearly indicates otherwise, the singular forms of "a", "an", and "the" are intended to include the plural form.

The embodiments of the present application provide an OpenStack-based cloud computing platform upgrading method and the related device. Wherein the OpenStack-based cloud computing platform upgrading method can be applied to cloud computing platforms to achieve large-scale upgrades of, including but not limited to, cloud computing infrastructure in the upgrade application scenarios of cloud computing platforms.

In the face of the problem that traditional cloud computing infrastructure upgrade solutions are difficult to ensure the effective continuation of cloud computing services, the embodiment of the present application proposes an OpenStack-based cloud computing platform upgrading method. The core idea of the embodiment of the present application is: when a control node runs a first control node virtual machine, on a host where the control node is located, offline creating a second control node virtual machine corresponding to the upgraded version, and when the creation of the second control node virtual machine is completed, replacing the first control node virtual machine with the second control node virtual machine, in order to complete the virtual machine upgrade of the control node. By adopting this approach for virtual machine upgrades of control nodes, the interruption time of control nodes can be controlled within a few minutes, effectively ensuring the reliability, stability, and service continuity of cloud computing infrastructure upgrades, including but not limited to large-scale upgrades. This enables cloud computing platforms to complete upgrades without affecting service as much as possible.

Below, some embodiments of the present application will be described in detail with reference to the accompanying drawings. In non-conflicting situations, the following embodiments and their features can be combined with each other.

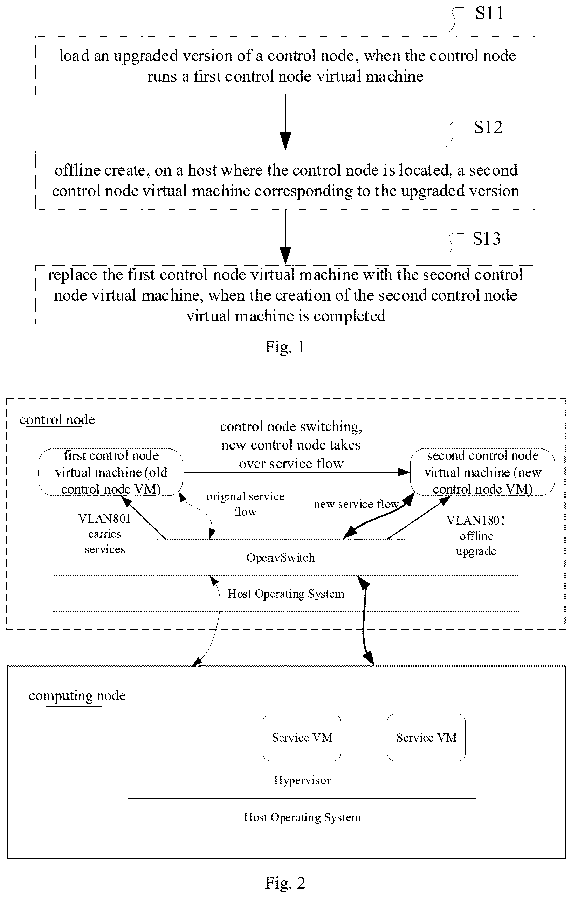

Please refer to Fig. 1, which is a flowchart of the OpenStack-based cloud computing platform upgrading method provided in an embodiment of the present application, the method includes but is not limited to the following Steps S11 to S13:
S11: An upgraded version of a control node is loaded when the control node runs a first control node virtual machine.

Explanatively, cloud computing platforms include control nodes and computing nodes. The control nodes of cloud computing platforms are generally implemented using virtual machines, and the virtual machines of control nodes can be referred to as control node virtual machine or control node virtual machines.

In the case of upgrading the control node, continue running the first control node virtual machine currently running on the control node, and loading the upgraded version corresponding to the version upgraded on the control node while running the first control node virtual machine.

S12: A second control node virtual machine corresponding to the upgraded version is offline created on the host where the control node is located.

Explanatively, after loading the upgraded version of the control node, the second control node virtual machine corresponding to the upgraded version is created on the host where the control node is located. During the process of creating the second control node virtual machine, network isolation is achieved between the second control node virtual machine and the system through a transformation that includes but not limited to OVS (Open vSwitch) bridge Virtual Local Area Network (VLAN) mapping. It is possible to maintain network isolation between the second control node virtual machine and the current system by the method including but not limited to mapping the mapping relationship of the VLAN sub interface configuration of the second control node virtual machine to the VLAN mapping rule currently used by non-service, thereby achieving offline creation of the second control node virtual machine corresponding to the upgraded version on the host where the control node is located. For example, when the VLAN sub interface of the first control node virtual machine uses VLAN mapping relationship A to handle the service, instead of configuring the VLAN mapping relationship of the second control node virtual machine as VLAN mapping relationship A, the VLAN mapping relationship of the second control node virtual machine can be configured as other VLAN mapping relationships B, C, or D besides mapping relationship A, thereby isolating the network of the second control node virtual machine from the current system and achieving offline creation of the second control node virtual machine.

For example, when creating the second control node virtual machine corresponding to the upgraded version, the creation process and configuration of the second control node virtual machine can be the same as the first control node virtual machine without affecting the normal operation of the first control node virtual machine. For the configuration of the second control node virtual machine that affects the normal operation of the first control node virtual machine, a similar configuration is adopted to stagger the configuration of the first control node virtual machine for replacement configuration. For example, the mapping relationship of the VLAN sub interface configuration of the management network plane of the second control node virtual machine can be configured through the OpenFlow flow table, including but not limited to mapping VLAN 801 to VLAN 1801, to configure the VLAN sub interface configuration of the management network plane of the second control node virtual machine, thus while ensuring that the control node runs the first control node virtual machine normally to handle services, the created second control node virtual machine is network-isolated from the first control node virtual machine, without interrupting the service processing of the cloud computing platform. Please refer to Fig. 2, which is a schematic diagram of the control node switching for upgrading the OpenStack-based cloud computing platform upgrading method provided in an embodiment of the present application. As shown in Fig. 2, in this example, while the first control node virtual machine continues to perform service processing, the second control node virtual machine is offline upgraded. The second control node virtual machine is a new control node VM based on VLAN1801 offline upgrade, which corresponds to the upgraded version of the control node.

S13: The first control node virtual machine is replaced with the second control node virtual machine when the creation of the second control node virtual machine is completed.

Explanatively, after the creation of the second control node virtual machine is completed, the currently running first control node virtual machine is shut down, the Openflow flow table of the second control node virtual machine is deleted, and the VLAN mapping of the second control node virtual machine is switched to the VLAN mapping used by the first control node virtual machine, thereby replacing the first control node virtual machine with the second control node virtual machine to take over the service. By adopting the above method to upgrade the control nodes, the cloud computing platform can be upgraded. The duration of cloud computing platform service interruption throughout the entire upgrade process only involves stopping the first control node virtual machine, deleting the Openflow flow table of the second control node virtual machine, and reconnecting the computing node with the second control node virtual machine. The shortest interruption time can be controlled within a few minutes. For example, in an example, the interruption time can be controlled within 3-8 minutes. Compared with traditional technology where offline upgrades can cause service interruptions for a long time, the embodiments of the present application greatly shorten the impact of service interruptions.

For example, please continue to refer to Fig. 2, when switching the first control node virtual machine (old control node VM) to the second control node virtual machine (new control node VM), the subsequent service flow (i.e. new service flow) is taken over by the second control node virtual machine, thereby completing the upgrade of the control node.

In an embodiment of the present application, by loading an upgraded version of the control node when a control node runs a first control node virtual machine, offline creating a second control node virtual machine corresponding to the upgraded version on a host where the control node is located, and replacing the first control node virtual machine with the second control node virtual machine when the creation of the second control node virtual machine is completed, due to the fact that the creation of the second control node virtual machine corresponding to the upgraded version does not affect the normal running of the first control node virtual machine, that is, during the process of upgrading the control node, the original control node can continue to provide services, and the interruption time of the control node that affects the service is only during the replacement period corresponding to the replacement of the first control node virtual machine with the second control node virtual machine. The interruption time of control nodes can be controlled within a few minutes, which can effectively ensure the reliability, stability, and service continuity of cloud computing infrastructure upgrades, including but not limited to large-scale upgrades. This enables the cloud computing platform to complete upgrades without affecting service as much as possible, meeting the expansion needs of adding new hardware and new networks in the present network of cloud computing platforms, as well as the adjustment needs such as modifying nodes or deleting nodes.

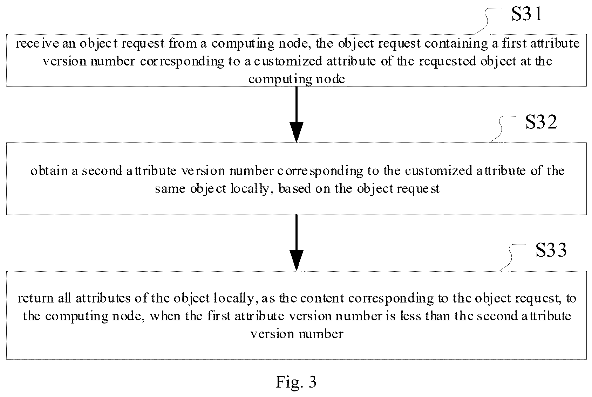

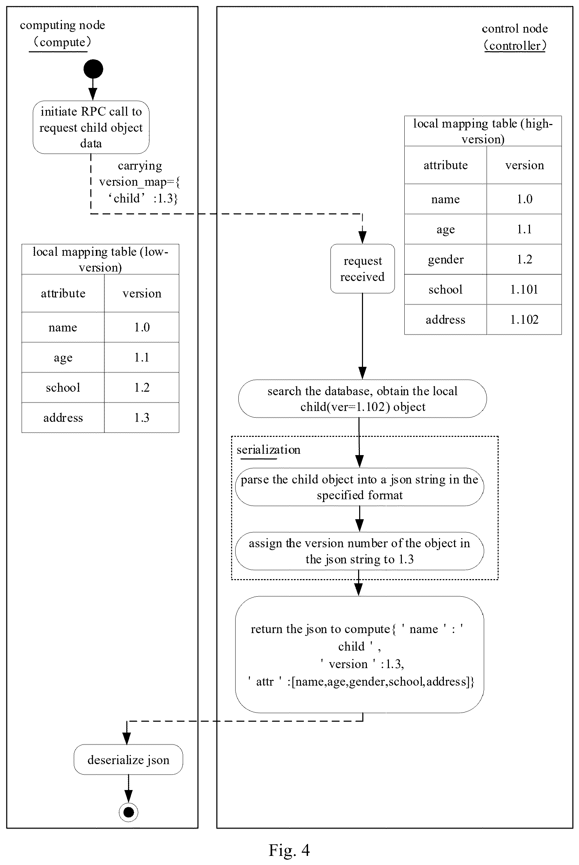

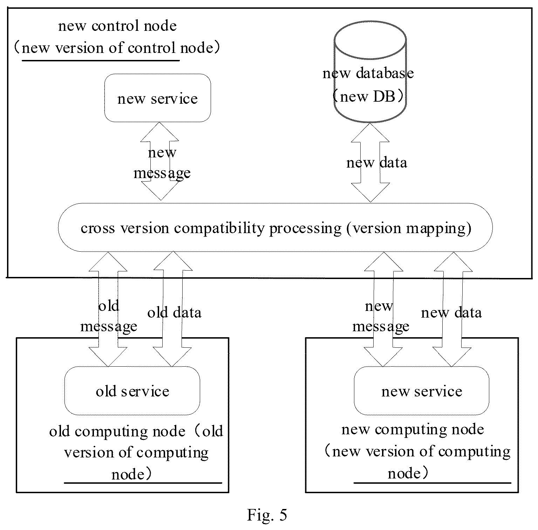

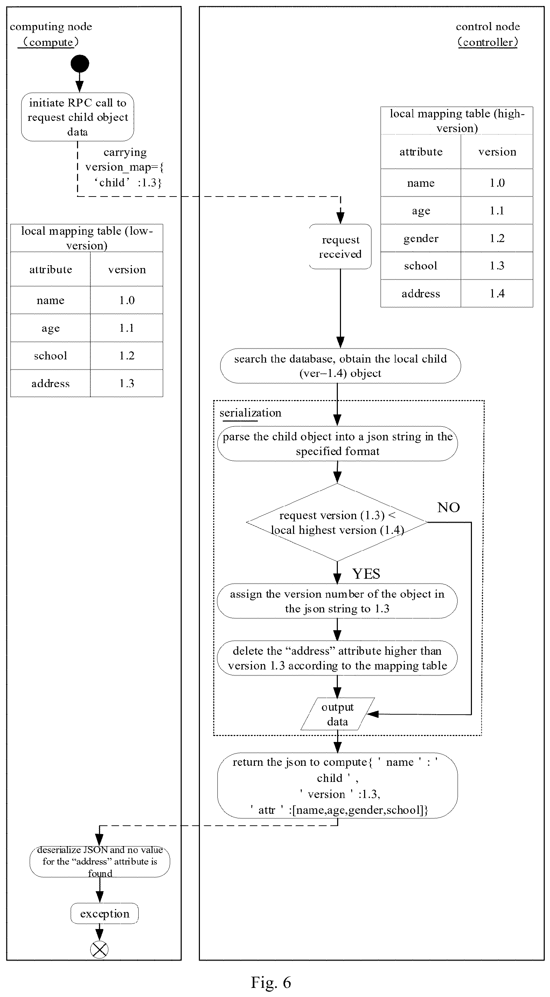

In an embodiment, please refer to Figs. 3 to 6. Fig. 3 is a first sub flowchart of the OpenStack-based cloud computing platform upgrading method provided in an embodiment of the present application, Fig. 4 is a first interaction flowchart for cross version compatibility of the OpenStack-based cloud computing platform upgrading method provided in an embodiment of the present application, Fig. 5 is a flowchart of the cross version compatible processing of different computing nodes for the OpenStack-based cloud computing platform upgrading method provided in an embodiment of the present application, and Fig. 6 is a flowchart of the original serialization-deserialization processing method in the OpenStack-based cloud computing platform upgrading method provided in an embodiment of the present application. As shown in Fig. 3, in this embodiment, the method further comprises:
S31: An object request is received from a computing node, the object request containing a first attribute version number corresponding to a customized attribute of the requested object at the computing node;
S32: A second attribute version number corresponding to the customized attribute of the same object locally is obtained based on the object request.
S33: All attributes of the object locally are returned, as the content corresponding to the object request, to the computing node when the first attribute version number is less than the second attribute version number.

Explanatively, for the cloud computing platform based on the OpenStack cloud computing management platform project, attributes of an object include both native attributes and customized attributes. Native attributes include but are not limited to the attributes of objects configured based on the OpenStack cloud computing management platform project itself, while the customized attributes are the attributes customized by the cloud computing platform according to service needs. For example, taking the OpenStack cloud computing management platform project as an example, the OpenStack cloud computing management platform project and the cloud computing platform belong to different entities. The OpenStack cloud computing management platform project is the manufacturer, and the cloud computing platform is the cloud computing service provider. The cloud computing service providers build cloud computing platforms based on the OpenStack cloud computing management platform project produced by the manufacturer. For the cloud computing platforms based on OpenStack cloud computing management platform projects, in the low-version OpenStack cloud computing management platform projects, child objects contain two native attributes, name and age, configured by the manufacturer, while in the high-version OpenStack cloud computing management platform projects, child objects contain three native attributes, name, age, and gender, configured by the manufacturer. Based on the above two versions of the OpenStack cloud computing management platform project, cloud computing service providers have added two customized attributes, school and address, according to service needs. Therefore, the child object of the cloud computing platform includes five attributes: name, age, gender, school, and address. We can assign a version number to the attribute configuration object of each version of the OpenStack cloud computing management platform project to identify which version an attribute belongs to, as shown in Table 1 below. For the child object, the attributes included in the child and their corresponding version numbers in the low-version and high-version cloud computing platforms are presented.

**Table 1**

| Attributes of child object | low-version number | high-version number |
|---|---|---|
| name | 1.0 | 1.0 |
| age | 1.1 | 1.1 |
| gender | - | 1.2 |
| school | 1.2 | 1.101 |
| address | 1.3 | 1.102 |

For the control nodes and computing nodes included in the cloud computing platform, due to their respective deployments, recreations, migrations, etc., the versions of the control nodes and computing nodes, as well as different computing nodes, may not be consistent. Therefore, when the computing node sends an object request to the control node, the control node receives the object request from the computing node, which includes the first attribute version number corresponding to the customized attribute of the requested object at the computing node locally. According to the object request, the control node obtains the second attribute version number corresponding to the customized attribute of the object locally. When the first attribute version number is less than the second attribute version number, that is, when the version corresponding to the first attribute version number is lower than the version corresponding to the second attribute version number, all the attributes of the object locally are returned to the computing node as the content corresponding to the object request. Please continue to refer to Fig. 5. As shown in Fig. 5, after the above cross version compatibility processing, in the new control node, for the old computing node, it supports processing using old messages and old data; for the new computing node, it supports processing using new messages and new data, thus achieving cross version compatibility that directly adapts to the new control node and the old computing node, and to the new control node and the new computing node.

For example, please continue to refer to Fig. 4. As shown in Fig. 4, in this example, taking the cloud computing platform based on the OpenStack cloud computing management platform project as an example, the computing node initiates an RPC call to request child object data from the control node. The object request carries the content of "update_map= {'child', 1.3}". After receiving the object request, the control node retrieves the local child object data by searching the corresponding database and returns the name, age, gender, school, and address to the computing node. Compared with the native processing flow of deleting the attributes of external versions in requests in the native OpenStack cloud computing management platform project shown in Fig. 6, the properties of the object returned by the embodiments of the present application are the complete set, which can solve the consistency problem of serialization and deserialization involved in the cloud computing platform of the OpenStack cloud computing management platform project when multiple versions of different computing nodes coexist, and avoid exceptions caused by deserialization.

Furthermore, the second attribute version number is greater than the native attribute version number corresponding to the object's native attribute.

Explanatively, the version number is represented using encoding with size comparability, and the second attribute version number is set to be greater than the native attribute version number corresponding to the object's native attribute. By comparing the first attribute version number with the second attribute version number and returning all attributes of the object locally as the content corresponding to the object request to the computing node, the native attribute is included in the content corresponding to the object request returned to the computing node, where the high-version object contains all attributes of the low-version object with the same name.

Furthermore, an unused version number is reserved between the second attribute version number and the native attribute version number.

Explanatively, there is an unused version number reserved between the second attribute version number and the native attribute version number, that is, there is a preset version number spatial distance between the second attribute version number and the native attribute version number, thus separating the native attribute from the customized attribute and separating them by a certain version number distance, but there is a sequential relationship in terms of size. For example, the native attribute version numbers range from 1.0 to 1.2, while the customized attribute version numbers can gradually increase from 1.101, thus reserving the middle 1.3 to 1.99. The embodiment of the present application reserves a certain amount of unused version numbers between the second attribute version number and the native attribute version number, which enables customized attributes to be compatible between versions of different native attributes. Reserving unused version numbers for native attributes that may be added in the future can avoid conflicts between customized attributes and native attributes during the evolution of cloud computing platforms.

In an embodiment of the present application, by receiving an object request from a computing node, the object request containing a first attribute version number corresponding to a customized attribute of the requested object at the computing node, obtaining a second attribute version number corresponding to the customized attribute of the same object locally, based on the object request, and when the first attribute version number is less than the second attribute version number, returning all attributes of the object locally as the content corresponding to the object request to the computing node, where the attributes of the objects returned by the embodiments of the present application are always the complete set, the present application can solve the problem of multiple versions coexisting for different computing nodes, without the need to upgrade the computing nodes while only upgrading the control nodes, achieving version compatibility of different computing nodes.

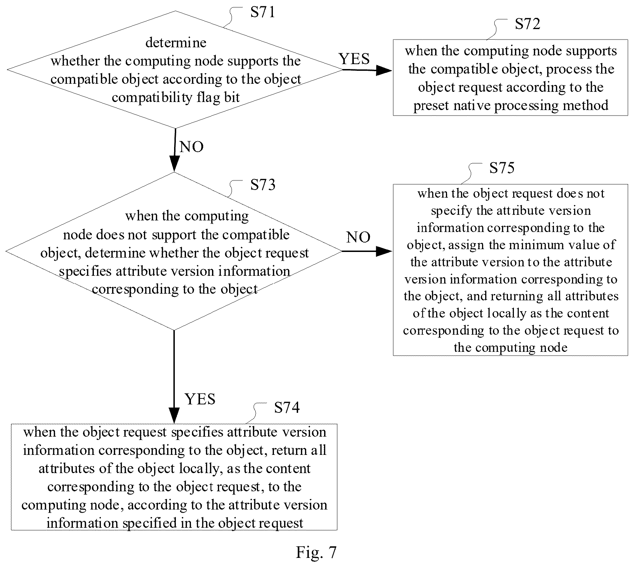

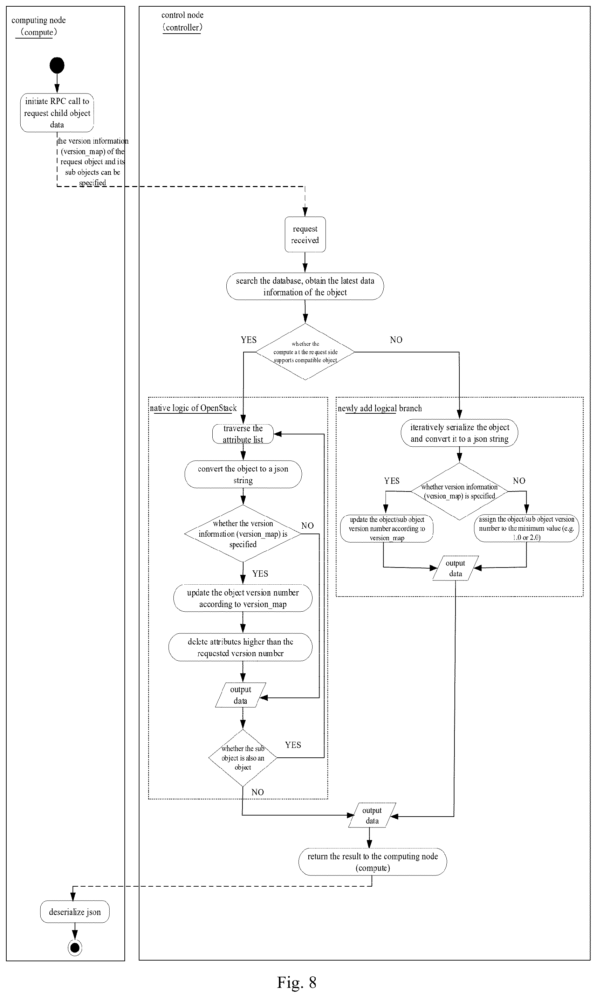

In an embodiment, please refer to Figs. 7 and 8. Fig. 7 is a second sub flowchart of the OpenStack-based cloud computing platform upgrading method provided in an embodiment of the present application, and Fig. 8 is a second interaction flowchart for cross version compatibility of the OpenStack-based cloud computing platform upgrading method provided in an embodiment of the present application. As shown in Fig. 7, in this embodiment, the object request contains an object compatibility flag bit; when the first attribute version number is less than the second attribute version number, returning all attributes of the object locally as the content corresponding to the object request to the computing node comprising:
S71: Whether the computing node supports a compatible object is determined according to the object compatibility flag bit.
S72: When the computing node supports the compatible object, the object request is processed according to the preset native processing method.
S73: When the computing node does not support the compatible object, whether the object request specifies attribute version information corresponding to the object is determined.
S74: When the object request specifies attribute version information corresponding to the object, all attributes of the object locally are returned, as the content corresponding to the object request, to the computing node, according to the attribute version information specified in the object request.
S75: When the object request does not specify the attribute version information corresponding to the object, a minimum value of the attribute version is assigned to the attribute version information corresponding to the object, and all the attributes of the object locally are returned, as the content corresponding to the object request, to the computing node.

Explanatively, preset the object compatibility flag bit and use the object compatibility flag bit to identify whether the computing node supports the compatible objects. Object compatibility flag bit can be represented by key value pairs, for example, a key value pair of "key=1" indicates that the computing node supports the compatible object, and a key value pair of "key=0" indicates that the computing node does not support the compatible object. Therefore, key value pairs are used to represent object compatibility flag bits. Configure the object compatibility flag bits at the computing node, and determine whether the computing node supports compatible objects based on the object compatibility flag bits.

After receiving the object request, determine whether the computing node supports the compatible object based on the object compatibility flag bit contained in the object request. If the computing node supports the compatible object, it indicates that the computing node and the control node are mutually compatible versions. For example, if the old computing node has been upgraded to an appropriate version, or if the computing node is a new node created based on a compatible version with the control node, the version of the computing node is consistent with that of the control node, therefore, the version of the computing node is consistent with that of the control node, so the computing node and the control node are mutually compatible versions. In the case where the versions of the two are compatible with each other, process the object request according to the preset native processing methods including but not limited to OpenStack. If the computing node does not support compatible objects, it indicates that the computing node and the control node are mutually incompatible versions. For example, if the control node has been upgraded to a new version, while the old computing node has not been upgraded to the appropriate version, that is, the old computing node still uses the original old version, therefore, the version of the computing node is not consistent with that of the control node, so the computing node and the control node are mutually incompatible versions. In the case where the versions of the two are not compatible with each other, further determines whether the object request specifies the attribute version information (version_map) corresponding to the object; when the object request specifies attribute version information corresponding to the object, return all attributes of the object locally as the content corresponding to the object request to the computing node according to the attribute version information specified in the object request. Furthermore, when the object request does not specify the attribute version information corresponding to the object, assign the minimum value of the attribute version to the attribute version information corresponding to the object, and return all the attributes of the object locally as the content corresponding to the object request to the computing node. As shown in Fig. 8, the version number of the object or sub object can be assigned the minimum value of 1.0 or 2.0, and the corresponding data output can be performed.

In an embodiment of the present application, by determining whether the computing node supports a compatible object according to the object compatibility flag bit, when the computing node supports the compatible object, processing the object request according to the preset native processing method including but not limited to OpenStack, when the computing node does not support the compatible object, determining whether the object request specifies attribute version information corresponding to the object, when the object request specifies attribute version information corresponding to the object, returning all attributes of the object locally as the content corresponding to the object request to the computing node according to the attribute version information specified in the object request, and when the object request does not specify the attribute version information corresponding to the object, assigning a minimum value of the attribute version to the attribute version information corresponding to the object, and returning all the attributes of the object locally as the content corresponding to the object request to the computing node, thereby it enables the cloud computing platform to be compatible with native serialization-deserialization processing methods including but not limited to OpenStack, moreover, when the object request does not specify the attribute version information corresponding to the object, assigning the minimum value of the attribute version, ensures the computing node to parse and process based on the minimum attribute version information, which can realize the normal parsing of the computing node, achieve the purpose of making the computing node compatible with the control node, and thus can ensure the effective continuation of the service of the cloud computing platform when only the control node is upgraded without upgrading the computing node.

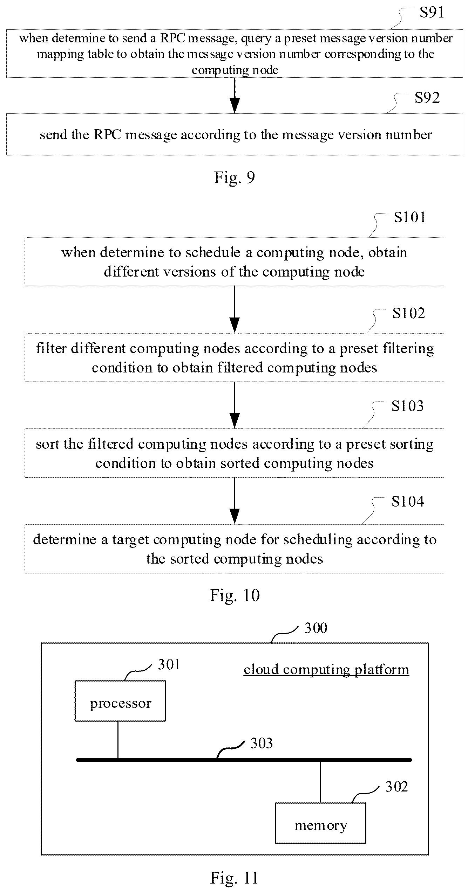

In an embodiment, please refer to Fig. 9, which is a third sub flowchart of the OpenStack-based cloud computing platform upgrading method provided in an embodiment of the present application. As shown in Fig. 9, in this embodiment, the method further comprises:
S91: When determining to send an RPC message, a preset message version number mapping table is queried to obtain the message version number corresponding to the computing nod;
S92: The RPC message is sent according to the message version number.

Explanatively, RPC message refers to the message based on Remote Procedure Call. Message Version refers to the different processing methods for messages based on different formats or structures. Therefore, the format or structure of message is determined by the version of the message, which can be represented by the message version number. OpenStack's cross host interaction relies on RPC messages. When registering the message queue, the message version number is declared, that is the message version number, so that each computing node corresponds to the corresponding message version number. The mapping relationship between each computing node and its corresponding message version number is reserved in the control node, and the mapping relationship between different computing nodes and their corresponding message version numbers is represented in a table, that is, the preset message version number mapping table.

When determining to send an RPC message to a certain computing node, query a preset message version number mapping table to obtain the message version number corresponding to the computing node, and sending the RPC message according to the message version number. When there is no message version number corresponding to the computing node in the preset message version number mapping table, use the native OpenStack processing method to process it, so as to send RPC message to the computing node in a manner consistent with the message version number of the computing node by specifying the corresponding message version number.

In an embodiment of the present application, by querying a preset message version number mapping table to obtain the message version number corresponding to the computing node when determining to send an RPC message, and sending the RPC message according to the message version number, it saves the preset message version number mapping table in the control node. Before sending the RPC message, it queries the message version number of the computing node according to the preset message version number mapping table to specify the corresponding message version number to send the RPC message. Compared with sending the RPC message directly without considering the message version number of the target node corresponding to the RPC message in native OpenStack, it can avoid the situation of sending RPC messages from the high-version of the control node to the low-version of the computing node in native OpenStack, and improve the correctness of RPC message processing.

In an embodiment, please refer to Fig. 10, which is a fourth sub flowchart of the OpenStack-based cloud computing platform upgrading method provided in an embodiment of the present application. As shown in Fig. 10, in this embodiment, the method further comprises:
S101: When determine to schedule a computing node, different versions of the computing node are obtained;
S102: The different computing nodes are filtered according to a preset filtering condition to obtain filtered computing nodes;
S103: The filtered computing nodes are sorted according to a preset sorting condition to obtain sorted computing nodes;
S104: A target computing node is determined for scheduling according to the sorted computing nodes.

Explanatively, when determine to schedule a computing node, different versions of computing nodes are obtained, for example, for OpenStack-based cloud computing platform, the versions of computing nodes can include but not limited to T version M version and N version. Different computing nodes can be filtered according to preset filtering conditions. Different versions of computing nodes can be filtered at a single or multiple levels according to different filtering conditions to obtain the remaining filtered computing nodes. Then, according to the preset sorting condition, the filtered computing nodes are sorted, such as sorting computing nodes of the same version, so as to group computing nodes of the same version together. Among different computing nodes within the same version, different computing nodes within the same version can also be sorted according to the performance and other parameters of each computing node, so as to obtain the order of different computing nodes within the same version. After version sorting and sorting within the same version, the sorted computing nodes are obtained. Finally, based on the sorted computing nodes, computing nodes that meet the corresponding quantity and other preset conditions are determined as the target computing nodes for scheduling.

For example, for OpenStack-based cloud computing platform, Since OpenStack includes version T, version M, and version N, correspondingly, the computing nodes in the cloud computing platform also have nodes based on OpenStack of version T, version M, and version N, which are respectively called T-version computing nodes, M-version computing nodes, and N-version computing nodes. Assuming that the OpenStack-based cloud computing platform includes T-version computing nodes, M-version computing nodes, and N-version computing nodes, since T-version computing nodes report resources through placement, different T-version computing nodes will be filtered through placement during the scheduling process of T-version computing nodes. Then, T-version computing nodes that have been filtered through placement will be filtered through regular filters to select available computing nodes, while M-version computing nodes and N-version computing nodes will be directly filtered through regular filters to select available computing nodes. Then, the available filtered computing nodes selected through filtering are combined with but not limited to version types and scheduling scenarios for sorting, in order to obtain sorted nodes. Then, the corresponding number of target nodes are determined from the sorted nodes as the nodes used for scheduling. For example, in an example, the first step is to filter the T-version computing nodes through a placement filter, which can select 200 computing nodes from 1000 T-version computing nodes, resulting in 200 T-version computing nodes. The second step is to add a total of 500 computing nodes from M-version and N-version to the filtered 200 T-version computing nodes, and then filter the 700 computing nodes through a regular filter, resulting in a total of 400 computing nodes containing T-version, M-version and N-version. Further sort the 400 computing nodes, grouping the T-version computing nodes together, the M-version computing nodes together, and the N-version computing nodes together. Each T, M, and N-version can be sorted internally according to different sorting conditions based on performance and other parameters, thus sorting the T-version computing nodes. The M-version and N-version computing nodes can also be sorted internally within the same version computing nodes, and the T-version, M-version, and N-version computing nodes can be sorted between versions according to the needs of various scheduling scenarios such as deployment, migration, and recreation as sorting conditions. For example, in migration or recreation scenarios, computing nodes that are similar or identical to the original computing nodes are generally selected as preferred nodes. Computing nodes that are similar or identical to the original computing nodes can be used as the conditions for ranking high. In deployment scenarios, the corresponding conditions set by deployment can be selected as preferred nodes. Therefore, the computing nodes of T, M, and N-version are not only sorted between versions, but also sorted among different computing nodes within the same version to obtain sorted computing nodes. The corresponding target computing nodes can be selected from the sorted computing nodes for scheduling.

In an embodiment of the present application, by obtaining different versions of a computing node when the computing node is determined to be scheduled, filtering the different computing nodes according to a preset filtering condition to obtain filtered computing nodes, sorting the filtered computing nodes according to a preset sorting condition to obtain sorted computing nodes, and determining the target computing node for scheduling according to the sorted computing nodes, for example scheduling the top ranked computing nodes as the preferred target computing nodes, which can achieve matching scheduling of computing nodes, and enable normal migration, recreation, and other operations between upgraded control nodes and old computing nodes, as well as between new computing nodes and old computing nodes, to achieve compatibility between new and old computing nodes, and to achieve virtual machine related service operations between computing nodes of the same version as much as possible, and to ensure effective continuity of cloud computing services.

Please refer to Fig. 11, which is a schematic diagram of the structure of a cloud computing platform provided in an embodiment of the present application. As shown in Fig. 11, the cloud computing platform device 300 includes a processor 301 and a memory 302, which are connected by a bus 303, such as an 12C (Inter integrated Circuit) bus.

Specifically, processor 301 is used to provide computing and control capabilities to support the operation of the entire cloud computing platform. The processor 301 can be a Central Processing Unit (CPU), which can also be other general-purpose processors, Digital Signal Processor (DSP), Application Specific Integrated Circuit (ASIC), Field Programmable Gate Array (FPGA), or other programmable logic devices, discrete gates or transistor logic devices, discrete hardware components, etc. Wherein a general-purpose processor can be a microprocessor or any conventional processor.

Specifically, the memory 302 can be a Flash chip, Read Only Memory (ROM) disk, optical disc, USB flash drive, or portable hard drive.

Those skilled in the art can understand that the structure shown in Fig. 11 is only a partial block diagram related to the embodiments of the present application, and does not constitute a limitation on the cloud computing platform to which the embodiments of the present application are applied. Specific servers may include more or fewer components than shown in the figure, or combine certain components, or have different component arrangements.

Wherein the processor is used to run computer programs stored in memory and implement any of the OpenStack-based cloud computing platform upgrading methods provided in the embodiments of the present application when executing the computer programs.

It should be noted that those skilled in the art can clearly understand that, for the convenience and simplicity of description, the specific operation process of the cloud computing platform described above can refer to the corresponding process in the embodiments of the OpenStack-based cloud computing platform upgrading method, which will not be repeated here.

The embodiments of the present application also provide a storage medium for computer-readable storage, wherein the storage medium stores one or more programs that can be executed by one or more processors to implement any of the steps of the OpenStack-based cloud computing platform upgrading method provided in the embodiments of the present application.

Wherein the storage medium may be an internal storage unit of the cloud computing platform described in the previous embodiments, such as the memory of the cloud computing platform. The storage medium can also be an external storage device of the cloud computing platform, such as a plug-in hard drive, Smart Media Card (SMC), Secure Digital (SD) card, Flash Card, etc. equipped on the cloud computing platform.

Those skilled in the art can understand that all or some of the steps, systems, and functional modules/units in the disclosed methods, systems, and devices can be implemented as software, firmware, hardware, and appropriate combinations thereof. In hardware embodiment, the division between functional modules/units mentioned in the above description does not necessarily correspond to the division of physical components; For example, a physical component can have multiple functions, or a function or step can be executed collaboratively by several physical components. Some or all physical components can be implemented as software executed by processors such as central processing units, digital signal processors, or microprocessors, or as hardware, or as integrated circuits such as application specific integrated circuits. Such software can be distributed on computer-readable medium, which can include computer storage medium (or non-transitory medium) and communication medium (or transitory medium). As is well known to those skilled in the art, the term computer storage medium includes volatile and non-volatile, removable and non-removable medium implemented in any method or technology for storing information, such as computer-readable instructions, data structures, program modules, or other data. Computer storage medium includes but is not limited to Random Access Memory (RAM), Read Only Memory (ROM), Electrically Erasable Programmable Read Only Memory (EEPROM), flash memory or other memory technologies, Compact Disc Read Only Memory (CD-ROM), Digital Video Disc (DVD) or other optical disc storage, magnetic cartridges, magnetic tapes, magnetic disk storage or other magnetic storage devices, or any other medium that can be used to store desired information and can be accessed by a computer. In addition, it is well known to those skilled in the art that communication medium typically include computer-readable instructions, data structures, program modules, or other data in modulated data signals such as carriers or other transmission mechanisms, and may include any information delivery medium.

It should be understood that the term "and/or" used in the specification and the accompanying claims of the present application refers to any combination of one or more of the listed items and all possible combinations, including these combinations. It should be noted that, the terms "include", "comprises" or any other variants thereof herein are intended to cover non-exclusive inclusion, so that a process, method, article or system including a series of elements includes not only those elements, but also other elements not explicitly listed, or also includes elements inherent to such process, method, article or system. In the absence of further restrictions, an element defined by the sentence "comprising a ..." does not exclude the presence of other identical elements in the process, method, article or system comprising the element.

The above embodiment numbers are for description only and do not represent the advantages or disadvantages of the embodiments. The above is only a specific embodiment of the present application, but the scope of protection of the present application is not limited to this. Those skilled in the art can easily think of various equivalent modifications or substitutions within the technical scope disclosed in the present application, and these modifications or substitutions should be included in the scope of protection of the present application. Therefore, the scope of protection of the present application should be based on the scope of protection of the claims.

## Claims

1. An OpenStack-based cloud computing platform upgrading method, comprising:
loading an upgraded version of a control node, when the control node runs a first control node virtual machine;
offline creating, on a host where the control node is located, a second control node virtual machine corresponding to the upgraded version; and
replacing the first control node virtual machine with the second control node virtual machine, when the creation of the second control node virtual machine is completed.

2. The OpenStack-based cloud computing platform upgrading method according to claim 1, further comprising:
receiving an object request from a computing node, the object request containing a first attribute version number corresponding to a customized attribute of the requested object at the computing node;
obtaining a second attribute version number corresponding to the customized attribute of the same object locally, based on the object request; and
returning all attributes of the object locally, as the content corresponding to the object request, to the computing node, when the first attribute version number is less than the second attribute version number.

3. The OpenStack-based cloud computing platform upgrading method according to claim 2, wherein the second attribute version number is greater than a native attribute version number corresponding to the object's native attribute.

4. The OpenStack-based cloud computing platform upgrading method according to claim 3, wherein an unused version number is reserved between the second attribute version number and the native attribute version number.

5. The OpenStack-based cloud computing platform upgrading method according to any one of claims 2 to 4, wherein the object request contains an object compatibility flag bit; returning all attributes of the object locally as the content corresponding to the object request to the computing node, when the first attribute version number is less than the second attribute version number, comprising:
determining whether the computing node supports a compatible object according to the object compatibility flag bit;
when the computing node does not support the compatible object, determining whether the object request specifies attribute version information corresponding to the object;
when the object request specifies attribute version information corresponding to the object, returning all attributes of the object locally, as the content corresponding to the object request, to the computing node, according to the attribute version information specified in the object request.

6. The OpenStack-based cloud computing platform upgrading method according to claim 5, further comprising:
when the object request does not specify the attribute version information corresponding to the object, assigning a minimum value of the attribute version to the attribute version information corresponding to the object, and returning all attributes of the object locally as the content corresponding to the object request to the computing node.

7. The OpenStack-based cloud computing platform upgrading method according to claim 1, further comprising:
when determining to send an RPC message, querying a preset message version number mapping table to obtain the message version number corresponding to the computing node; and
sending the RPC message according to the message version number.

8. The OpenStack-based cloud computing platform upgrading method according to claim 1, further comprising:
when a computing node is determined to be scheduled, obtaining different versions of the computing node;
filtering the different computing nodes according to a preset filtering condition to obtain filtered computing nodes;
sorting the filtered computing nodes according to a preset sorting condition to obtain sorted computing nodes;
determining a target computing node for scheduling according to the sorted computing nodes.

9. A cloud computing platform, comprising a processor, a memory, a computer program stored in the memory and executable by the processor, and a data bus for establishing communication between the processor and the memory, wherein the computer program, when executed by the processor, implements the steps of the OpenStack-based cloud computing platform upgrading method according to any one of claims 1 to 8.

10. A storage medium for computer-readable storage, having one or more programs stored thereon, the one or more programs being executable by one or more processors to implement the steps of the OpenStack-based cloud computing platform upgrading method according to any one of claims 1 to 8.
